(19) Europäisches Patentamt
European Patent Office
Office européen des brevets

(11) **EP 1 907 509 B1**

(12) **EUROPEAN PATENT SPECIFICATION**

(45) Date of publication and mention of the grant of the patent:
**08.05.2019 Bulletin 2019/19**

(51) Int Cl.:
**C10G 11/05** (2006.01)        **B01J 29/46** (2006.01)
**B01J 29/80** (2006.01)

(21) Application number: **06748634.0**

(86) International application number:
**PCT/US2006/010721**

(22) Date of filing: **23.03.2006**

(87) International publication number:
**WO 2007/005075 (11.01.2007 Gazette 2007/02)**

(54) **PENTASIL CATALYST FOR LIGHT OLEFINS IN FLUIDIZED CATALYTIC UNITS**

PENTASILKATALYSATOR FÜR LEICHTE OLEFINE IN FCC-EINHEITEN

CATALYSEUR À BASE DE ZÉOLITE DE TYPE PENTASIL POUR LA PRODUCTION D'OLÉFINES LÉGÈRES DANS DES UNITÉS DE CRAQUAGE CATALYTIQUE À LIT FLUIDISÉ

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.06.2005 US 694945 P**

(43) Date of publication of application:
**09.04.2008 Bulletin 2008/15**

(73) Proprietor: **W.R. GRACE & CO.-CONN.**
**Columbia, MD 21044-4098 (US)**

(72) Inventors:
• **CHENG, Wu-Cheng**
  **Ellicott City, Maryland 21042 (US)**
• **KUMAR, Ranjit**
  **Clarksville, Maryland 21042 (US)**
• **KRISHNAMOORTHY, Meenakshi Sundaram**
  **Columbia, Maryland 21044 (US)**
• **ZIEBARTH, Michael Scott**
  **Ellicott City, Maryland 21043 (US)**
• **DEITZ, Philip S.**
  **Windsor Mill, Maryland 21244 (US)**

(74) Representative: **J A Kemp**
**14 South Square**
**Gray's Inn**
**London WC1R 5JJ (GB)**

(56) References cited:
**EP-A- 0 903 178        WO-A-2005/097950**
**CN-A- 1 465 527        US-A1- 2002 049 133**
**US-A1- 2005 020 867**

• **GRACE DAVISON: "OlefinsUltra"[Online] XP002393280 Retrieved from the Internet: URL:http://www.gracedavison.com/Products/fcc/rceurope1/docs/OlefinsUltra.pdf>**

Remarks:
The file contains technical information submitted after the application was filed and not included in this specification

**Description**

BACKGROUND

**Field Of The Invention**

The invention relates to use of catalysts to enhance yields of light olefins and liquefied petroleum gas (LPG) produced in a fluidized catalytic cracking (FCC) process.

**Description Of Related Art**

A discussion relating to use of ZSM-5-based catalysts to enhance olefin yields in FCC processes is found in U.S. 5,997,728. The following description of related art is based on that discussion.

Catalysts used in FCC processes are in particle form, usually have an average particle size in the range of 20 to 200 microns, and circulate between a cracking reactor and a catalyst regenerator of an FCC unit ("FCCU"). In the reactor, hydrocarbon feed contacts hot, regenerated catalyst which vaporizes and cracks the feed at about 400°C to 700°C, usually 500°C to about 550°C. The cracking reaction deposits carbonaceous hydrocarbons or coke on the catalyst, thereby deactivating it. The cracked products are separated from the coked catalyst. The coked catalyst is stripped of volatiles, usually with steam, in a catalyst stripper and then regenerated. The catalyst regenerator burns coke from the catalyst with oxygen containing gas, usually air, to restore catalyst activity and heat catalyst to, e.g., 500°C to 900°C, usually 600°C to 750°C. The hot regenerated catalyst recycles to the cracking reactor to crack more fresh feed. Flue gas from the regenerator may be treated to remove particulates or convert CO, and is then discharged into the atmosphere. The FCC process, and its development, is described in the Fluid Catalytic Cracking Report, Amos A. Avidan, Michael Edwards and Hartley Owen, in the Jan. 8, 1990 edition of the Oil & Gas Journal.

The product distribution from current FCC processes comprises a number of constituents, with gasoline being of primary interest to most refiners. Light olefins and LPG are also found in the FCC product, and are increasingly becoming of interest to refiners as those products become more valuable. The light olefins produced can be used for a number of purposes, e.g., they are upgraded via sulfuric or HF alkylation to high quality alkylate. LPG is used for cooking and/or heating purposes. Accordingly, operators of FCC units can vary the content of their products depending upon the markets they are serving and the value associated with each of the components found in an FCC product.

Propylene is a particular light olefin in high demand. It is used as a raw material in many of the world's largest and fastest growing synthetic materials and thermoplastics. Refiners are relying more and more on their FCC units to meet the increased demand for propylene, thus shifting the focus of the traditional FCC unit away from transportation fuels and more toward petrochemical feedstock production as operators seek opportunities to maximize margins.

If a refinery cannot expand its existing unit, FCC operators have rather limited options for increasing light olefin production. Reported options include:

    a. FCC processes employing ZSM-5 and large pore zeolite that share matrix, i.e., an integral catalyst.
    b. FCC processes using additive ZSM-5 catalyst.
    c. Production of cracked gas from gas oil over pentasil zeolites at high cracking severity.

If a refinery is not interested in gasoline being the primary product, the refinery could very well select processes falling under option (c) above. In doing so, the refinery typically increases the reactor temperatures and catalyst to oil ratio of the process to overcrack the feed to small olefins. However in doing so, the refinery is usually forced to reduce the amount of conventional catalyst, e.g., Y zeolite, compared to typical FCC gasoline processes, and to replace Y zeolite with increased amounts of pentasil. This is due in large part to the hydrogen transfer properties of the Y zeolite, and the likelihood of increased saturation of olefins in the presence of Y zeolite. Running the process at the more severe conditions in the presence of Y zeolite also increases coke production and the problems associated with that. However, reducing the amount of conventional catalyst to address these issues means less catalyst that effectively cracks the feed into gasoline range molecules, and, accordingly, a refiner typically has to sacrifice gasoline yield when electing the option of more severe conditions to enhance olefin yields. See US 2005/0020867.

For a refinery that is interested in minimizing the loss of gasoline production from its FCC unit, and is also interested in optimizing its production of light olefins to capture value associated with the aforementioned demand for propylene, the refinery often adopts option (b) for incorporation with its conventional large pore FCC catalyst. See US Patent 5,997,728 wherein ZSM-5 is employed in combination with conventional Y zeolite cracking catalyst at certain levels to maximize production of light olefins while preserving gasoline production. Generally speaking, such attempts typically mean adding more ZSM-5-based additive to increase, e.g., propylene, production. Such attempts, however, have limited impact because the typical FCC unit's capability of processing increased propylene is restricted or otherwise determined by the wet gas compressor existing in the unit to process LPG being produced by the unit. Accordingly, the refinery will only increase the ZSM-5 content of the inventory to the point such that the anticipated amount of LPG production does not exceed the capacity limit of the refinery's wet gas compressor.

Accordingly, for those refiners running FCC units to produce light olefins, and especially those refiners that are also interested in producing gasoline as primary product from their FCC unit, it would be desirable to have a catalyst that enhances olefins selectivity, e.g., propylene selectivity, on a unit LPG basis, relative to the selectivity of existing pentasil catalysts.

WO 2005/097950 (published after the claimed priority date) discloses catalyst compositions comprising metal phosphate bound zeolite which can be used to enhance olefin yields during hydrocarbon cracking processes. The composition typically further comprises aluminium phosphate and the metal of the metal phosphate is a metal other than aluminium.

US 2002/0049133 discloses a catalyst composition for fluidized catalytic cracking of hydrocarbons comprising attrition resistant particles having a high level (30-85%) of stabilized zeolite. The stabilized zeolite is bound by a phosphorus compound, alumina and oral binders wherein the alumina added to make the catalyst is about 10% by weight or less and the molar ratio of phosphorus ($P_2O_5$) to total alumina is sufficient to attain an attrition index of about 20 or less.

EP-A-0903178 discloses a pentasil-type molecule sieve containing composition which can be applied in catalytic cracking reaction for producing more ethylene and propylene and its preparation. The composition contains a pentasil-type molecular sieve having an $SiO_2/Al_2O_3$ molar ratio of 15-60 prepared by activation and modifications with phosphorus, alkaline earth metal and transition metal.

SUMMARY OF THE INVENTION

The invention provides a fluidizable catalyst composition that produces gasoline in FCC processes, as well as increases olefins yields compared to other commercially available catalysts.

Specifically, the invention provides a fluidizable particulate catalyst composition comprising:

> (a) pentasil zeolite having a silica/alumina framework,
> (b) 10 to 24 percent by weight phosphorus, measured as $P_2O_5$,
> (c) 1 to 10 percent by weight iron, measured as $Fe_2O_3$, present outside
> the pentasil framework, and
> (d) matrix,

wherein the amount of phosphorus and iron oxide above are based on the amount of particles containing the pentasil zeolite and the composition has an average particle size in the range of 20 to 200 microns and a Davison Attrition Index (DI) of less than 10.

It has been found that catalyst comprising phosphorus in the above amounts in combination with iron oxide located outside the pentasil's framework, e.g., added iron located in the catalyst particle's matrix, produce enhanced yields of olefins in FCC, as well as produces acceptable gasoline yields from the FCC process, especially when the invention is combined with catalyst containing additional zeolites such as Y zeolite, preferably at levels of additional zeolite of about 15% or greater.

Accordingly the invention also comprises an inventive catalytic cracking process, wherein the process comprises:

> (a) introducing a hydrocarbon feedstock into a reaction zone of a catalytic cracking unit comprised of a reaction zone, stripping zone, and a regeneration zone, which feedstock is characterised as having
> an initial boiling point from 120°C with end points up to 850°C;
> (b) catalytically cracking said feedstock in said reaction zone at a temperature from 400°C to 700°C, by causing the feedstock to be in contact with a fluidizable cracking catalyst comprising;

>> (i) pentasil zeolite having a silica/alumina framework,
>> (ii) 10 to 24 percent by weight phosphorus, measured as $P_2O_5$,
>> (iii) 1 to 10 percent by weight iron, measured as $Fe_2O_3$, present outside the pentasil framework, and
>> (iv) matrix,

wherein the amounts of phosphorus and iron oxide are based on the amount of particles containing pentasil zeolite and the catalyst composition has a Davison Attrition Index (DI) of less than 10;
> (c) stripping recovered used catalyst particles with a stripping fluid in a stripping zone to remove therefrom some hydrocarbonaceous material; and

(d) recovering stripped hydrocarbonaceous material from the stripping zone and circulating stripped used catalyst particles to the regenerator or regeneration zone; and regenerating said cracking catalyst in a regeneration zone by burning-off a substantial amount of coke on said catalyst, and with any added fuel component to maintain the regenerated catalyst at a temperature which will maintain the catalytic cracking reactor at a temperature from 400°C to 700°C; and

(e) recycling said regenerated hot catalyst to the reaction zone.

When combining the aforementioned pentasil zeolite in combination with an additional zeolite-containing cracking catalyst, the aforementioned cracking process produces enhanced yields of propylene under typical FCC conditions, and the selectivity of propylene, defined as the propylene yield per unit of LPG, is greater than the selectivity from processes using other pentasil-based catalysts.

BRIEF DESCRIPTION OF THE FIGURES

FIG. 1 shows propylene yield of the invention (Catalyst R) versus conversion compared to yields from ZSM-5-containing catalyst having less than 1% by weight iron oxide (Catalyst Q).

FIG. 2 shows propylene selectivity of the invention (Catalyst R) as defined by propylene yield versus LPG yield compared to the selectivity from ZSM-5-containing catalyst having less than 1% by weight iron oxide at constant conversion (Catalyst Q).

DETAILED DESCRIPTION

The present invention should be in a form capable of being maintained within a FCCU. FCC catalysts typically contain zeolite, which is a fine porous powdery material composed of the oxides of silicon and aluminum in a crystalline framework. In certain instances other elements may also be present in small amounts. The zeolites are typically incorporated into matrix and/or binder and particulated. When the particulate is aerated with gas, the particulated catalytic material attains a fluid-like state that allows it to behave like a liquid. This property permits the catalyst to have enhanced contact with the hydrocarbon feedstock to the FCCU and to be circulated between the reactor and the other units of the overall process (e.g., regenerator). Hence, the term "fluid" has been adopted by the industry to describe this material.

*Pentasil*

The pentasils suitable for this invention comprise those zeolite structures having a five-membered ring in the structure's framework. The framework comprises silica and alumina in tetrahedral coordination. In preferred embodiments the catalyst composition of this invention comprises one or more pentasils having an X-ray diffraction pattern of ZSM-5 or ZSM-11. Suitable pentasils include those described in U.S. Patent 5,380,690. Commercially available synthetic shape selective zeolites are also suitable.

The preferred pentasils generally have a Constraint Index of 1-12. Details of the Constraint Index test are provided in J. Catalysis, 67, 218-222 (1981) and in U.S. Pat. No. 4,711,710. Such pentasils are exemplified by intermediate pore zeolites, e.g., those zeolites having pore sizes of from about 4 to about 7 Angstroms. ZSM-5 (U.S. Pat. No. 3,702,886 and Re.29,948) and ZSM-11 (U.S. Pat. No. 3,709,979) are preferred. Methods for preparing these synthetic pentasils are well known in the art. The preferred embodiments of pentasil have relatively low silica to alumina molar ratios $(SiO_2/Al_2O_3)$, e.g., less than 100:1, preferably less than 50:1. A preferred embodiment of this invention has a silica to alumina ratio less than 30:1. The pentasil may also be exchanged with metal cations. Suitable metals include those metal dopants described in US 2004/011029. Briefly these metals can be alkaline earth metals, transition metals, rare earth metals, phosphorus, boron, noble metals and combinations thereof.

The pentasil is generally present in amounts sufficient to enhance the olefin yields compared to conventional cracking zeolite-based catalysts that do not contain such pentasils. Generally, the invention comprises pentasil in a range of about 0.1% to about 70% of the catalyst composition. In certain embodiments where maximum propylene is desired, it is preferable to have a pentasil content such that the ratio of pentasil to any conventional cracking zeolite-based catalyst present is at least 0.25. A catalyst composition containing significant amounts of both conventional zeolite catalyst and pentasil can provide enhanced olefin yields, especially when the catalyst also comprises rare earth and matrix surface area. Certain preferred embodiments of the invention comprise about 0.25% to about 35% by weight pentasil, and more typically the pentasil content is in the range of about 0.5 to about 20% by weight of the catalyst composition.

### Phosphorus

The phosphorus employed in this invention is selected to stabilize the pentasil. It is measured as $P_2O_5$. Without being held to a particular theory, it is believed that the phosphorus reacts with the pentasil's alumina acidic sites, thereby stabilizing the site with respect to any dealumination that can occur during use under typical FCC conditions or under even more severe conditions. The phosphorus therefore stabilizes the pentasil's activity with respect to converting molecules in the gasoline range and thereby enhances the olefin yields in an FCC process. The phosphorus can be added to the pentasil prior to forming catalyst particles containing the pentasil. Phosphorus-containing compounds suitable as a source of phosphorus for this invention include phosphoric acid ($H_3PO_4$), phosphorous acid ($H_3PO_3$), salts of phosphoric acid, salts of phosphorous acid and mixtures thereof. Ammonium salts such as monoammonium phosphate ($(NH_4)H_2PO_4$), diammonium phosphate ($(NH_4)_2HPO_4$), monoammonium phosphite ($(NH_4)H_2PO_3$), diammonium phosphite ($(NH_4)_2HPO_3$), and mixtures thereof can also be used. Other suitable phosphorous compounds are described in WO 98/41595, Those compounds include phosphines, phosphonic acid, phosphonates and the like.

The phosphorous is added in amounts during manufacture of the invention such that, on the basis of the particles containing the pentasil, the amount of phosphorus can range from about 10 to 24% by weight.

### Iron Oxide

The iron is present in the invention in amounts of 1 to 10% weight of the pentasil-containing particles present in the invention. The iron referred to above is iron that is outside of the pentasil framework. By "outside the pentasil framework" it is meant iron that is outside of a coordinate of the silica/alumina tetrahedral structure. In other words, the iron mentioned above is separate from and in addition to any iron present within the pentasil's structural framework. The iron of this invention, however, can include iron associated with an acid site of the framework, e.g., as a cation exchanged onto the site.

The iron of this invention is therefore typically found in the catalyst matrix or binder, as well as found within the pore structure of the pentasil. Indeed, the iron is generally iron that is separately added to and in combination with the other raw materials used to make the invention. While the iron is described herein as an iron oxide (i.e., $Fe_2O_3$), it is further believed that the iron in the composition can exist in other forms, such as iron phosphate. The actual form however does depend on how the iron is introduced to the catalyst invention. For example, the iron can be in the form of iron oxide in embodiments where iron is added as an insoluble iron oxide. On the other hand, if the iron is added as a water soluble salt, the iron may react with an anion to form, e.g., iron phosphate, when a ferric halide is added to a spray drier feed mixture containing phosphoric acid. Nevertheless, iron oxide has been selected to reflect the iron portion of the invention in large part because analytical methods typically used in the industry to measure the content of iron and other metals typically report their results in terms of their oxide.

### Optional Components

The catalyst composition also contains matrix, which is typically an inorganic oxide that has activity with respect to modifying the product of the FCC process, and in particular, activity to produce gasoline range olefinic molecules, upon which the pentasils described above can act. Inorganic oxides suitable as matrix include, but are not limited to, non-zeolitic inorganic oxides, such as silica, alumina, silica-alumina, magnesia, boria, titania, zirconia and mixtures thereof. The matrices may include one or more of various known clays, such as montmorillonite, kaolin, halloysite, bentonite, attapulgite, and the like. See U.S. Pat. No. 3,867,308; U.S. Pat. No. 3,957,689 and U.S. Pat. No. 4,458,023. Other suitable clays include those that are leached by acid or base to increase the clay's surface area, e.g., increasing the clay's surface area to about 50 to about 350 $m^2$/g as measured by BET. See U.S. Patent No. 4,843,052 (acid leached clays). The matrix component may be present in the catalyst in amounts ranging from 0 to about 60 weight percent. In certain embodiments, alumina is used and can comprise from about 10 to about 50 weight percent of the total catalyst composition.

Suitable matrices also include iron-containing clays, sometimes referred to as hard kaolin clays or "gray" clay. The latter term is sometimes used because these hard kaolin clays have a gray tinge or coloration. See US Patent 6,696,378. Hard kaolin clays are reported to have significant iron content, usually from about 0.6 to about 1 weight percent of $Fe_2O_3$. In embodiments containing gray clays, the iron content therein can be included as part of the iron oxide employed to make this invention. Given the amount of iron typically used in the invention, however, and the fact the iron in these clays is in a form that is not readily reactive, it would be preferred to employ additional sources of iron to make the invention when using such clays.

The matrix is usually provided and incorporated into the catalyst when formulating the catalyst as particles. When preparing the composition from a blend of pentasil-containing particles and additional zeolites, e.g., Y-type zeolite-containing particles, the matrix is added to one or both sets of particles. It is preferable to select a matrix that provides a surface area of at least about 25 m$^2$/g, preferably 45 to 130 m$^2$/g. Matrix surface area can be measured by employing a t-plot analysis based on ASTM 4365-95. It is particularly preferred that the particles containing the additional zeolite comprise the aforementioned high surface area matrix. The total surface area of the catalyst composition is generally at least about 130 m$^2$/g, either fresh or as treated at 816°C [1500°F] for four hours at 100% steam. Total surface area can be measured using BET.

Suitable materials for optional binders include inorganic oxides, such as alumina, silica, silica alumina, aluminum phosphate, as well as other metal-based phosphates known in the art. Aluminum chlorohydrol may also be used as a binder. When using metal phosphate binders other than aluminum phosphate, the metal can be selected from the group consisting of Group IIA metals, lanthanide series metals, including scandium, yttrium, lanthanum, and transition metals. In certain embodiments Group VIII metal phosphates are suitable. A method for making metal phosphates is known to those skilled in the art and described in pending U.S. Patent Application 10/817,069, filed April 2, 2004. Suitable aluminum phosphate binders are disclosed in U.S. Patents 5,194,412 and 5,286,369.

*Preparation*

Methods for preparing the invention include, but are not necessarily limited to, the following general processes.

(1) Ion exchange or impregnate a selected pentasil with iron, and then incorporating the ion exchanged or impregnated zeolite into the optional components mentioned earlier and form a catalyst therefrom.

(2) Combining an iron source with pentasil and optional components simultaneously and then form the desired catalyst.

(3) Manufacturing a pentasil-containing catalyst in a conventional manner, e.g., forming a pentasil catalyst comprising the pentasil and optional components mentioned earlier, and then subjecting the formed catalyst particles to ion exchange to include iron.

(4) Preparing a conventional catalyst as mentioned in (3), except impregnate the catalyst particle, e.g., via incipient wetness, with iron.

Spray drying is one process that can be used in any of the above-described methods to form the catalyst. For example, after combining the exchanged pentasil of (1) with the optional components in water, the resulting slurry can be spray dried into particles having an average particle size in the range of about 20 to about 200 microns, preferably 20 to about 100 microns, and the resulting catalyst particulate is then processed under conventional conditions.

The source of iron in any of the above methods can be in the form of an iron salt, and includes, but is not limited to iron (ferrous or ferric or both) halides such as chlorides, fluorides, bromides, and iodides. Iron carbonate, sulfate, phosphates, nitrates and acetates are also suitable sources of iron. The source of the iron is preferably aqueous-based, and iron can be present in the exchange solution at concentrations of about 1 to about 30%. When incorporating the iron via an exchange method, it is usually preferable to conduct the exchange such that at least 15% of the exchange sites present on the zeolite are exchanged with iron cations. The iron can also be incorporated through solid state exchange methods.

When impregnating the pentasil or pentasil-containing catalyst using method (1) or method (4), an iron source, usually in aqueous solution, is added to pentasil powder or catalyst particles until incipient wetness. The concentrations of iron for typical impregnation baths are in the range of 0.5 to 20%.

The source of iron for methods (1) and (2) can also be forms of iron such as iron oxide (ferrous or ferric), wherein such sources are not necessarily soluble, and/or the solubility of which depends on the pH of the media to which the iron source is added. As is shown later below in the examples, even in the event a relatively insoluble iron oxide is employed to make the invention, propylene selectivity advantages are obtained.

As mentioned earlier, one of the aforementioned optional components may contain iron and such materials thereby can serve as a source of iron, either as a primary or supplemental source. One such material is the iron-containing kaolin clay mentioned above.

In the instance that matrix and binder are included, these materials are added to the pentasil mixture as dispersions, solids, and/or solutions. A suitable clay matrix comprises kaolin. Suitable dispersible sols include alumina sols and silica sols known in the art. Suitable alumina sols are those prepared by peptizing alumina using strong acid. Particularly suitable silica sols include Ludox® colloidal silica available from W.R. Grace & Co.-Conn. Certain binders, e.g., those formed from binder precursors, e.g., aluminum chlorohydrol, are created by introducing solutions of the binder's precursors into the mixer, and the binder is then formed upon being spray dried and/or further processed, e.g., calcination.

The catalyst composition preferably has an attrition resistance suitable to withstand conditions typically found in FCC processes. Preparing catalysts to have such properties is known in the art and measurement of this property is often made using the Davison Attrition Index. To determine the Davison Attrition Index (DI) of the invention 7.0 cc of sample catalyst is screened to remove particles in the 0 to 20 micron range. Those remaining particles are then contacted in a hardened steel jet cup having a precision bored orifice through which an air jet of humidified (60%) air is passed at 21 liter/minute for 1 hour. The DI is defined as the percent of 0-20 micron fines generated during the test relative to the amount of >20 micron material initially present, i.e., the formula below.

$$DI = 100 \text{ x } \frac{\text{wt \% of 0-20 micron material formed during test}}{\text{wt \% of original 20 microns or greater material before test}}$$

The lower the DI number, the more attrition resistant is the catalyst. An acceptable attrition resistance is indicated by a DI of less than 10 and most preferably less than 5.

Once the pentasil-containing catalyst of the invention is prepared, the invention can be used to make up 100% of a catalyst inventory, or it can be added to a catalyst inventory as an additive, e.g., as an "olefins additive", or it can be combined with additional zeolite-based cracking catalyst to form a primary cracking catalyst. In general, the pentasil containing catalyst particles can comprise 0.5 to about 80%, preferably about 1 to about 60%, and preferably about 1 to about 30% by weight of the total catalyst inventory.

*Additional Zeolite-Based Cracking Catalyst*

The aforementioned, additional zeolite-based cracking catalyst can be any zeolite having catalytic activity in a hydrocarbon conversion process. Zeolites suitable for cracking hydrocarbons in a FCC process are particularly preferred. Typically, the zeolite will have a large pore size characterized by a pore structure with an opening of at least 0.7 nm.

Suitable large pore zeolites comprise crystalline alumino-silicate zeolites such as synthetic faujasite, i.e., type Y zeolite, type X zeolite, and Zeolite Beta, as well as heat treated (calcined) and/or rare earth exchanged derivatives thereof. Zeolites that are particularly suited include calcined, rare earth exchanged type Y zeolite (CREY), the preparation of which is disclosed in U.S. Pat. No. 3,402,996, ultra stable type Y zeolite (USY) as disclosed in U.S. Pat. No. 3,293,192, as well as various partially exchanged type Y zeolites as disclosed in U.S. Pat. Nos. 3,607,043 and 3,676,368. Other suitable large pore zeolites include MgUSY, ZnUSY, MnUSY, HY, REY, CREUSY, REUSY zeolites, and mixtures thereof. The zeolite of this invention may also be blended with molecular sieves such as SAPO and ALPO as disclosed in U.S. Pat. No. 4,764,269.

Standard Y-type zeolite is commercially produced by crystallization of sodium silicate and sodium aluminate. This zeolite can be converted to USY-type by dealumination, which increases the silicon/aluminum atomic ratio of the parent standard Y zeolite structure. Dealumination can be achieved by steam calcination or by chemical treatment. The additional zeolite based cracking catalyst can also be formed from clay microspheres that have been "zeolitized" *in situ* to form zeolite Y. Briefly, the zeolite Y is formed from calcined clay microspheres by contacting the microspheres to caustic solution at 180°F (82°C) "Commercial Preparation and Characterization of FCC Catalysts", Fluid Catalytic Cracking: Science and Technology, Studies in Surface Science and Catalysis, Vol. 76, p. 120 (1993).

Rare earth exchanged zeolites that can be used in the invention are prepared by ion exchange, during which sodium atoms present in the zeolite structure are replaced with other cations, usually as mixtures of rare earth metal salts such as those salts of cerium, lanthanum, neodyminum, naturally occurring rare earths and mixtures thereof to provide REY and REUSY grades, respectively. These zeolites may be further treated by calcinations to provide the aforementioned CREY and CREUSY types of material. MgUSY, ZnUSY and MnUSY zeolites can be formed by using the metal salts of Mg, Zn or Mn or mixtures thereof in the same manner as described above with respect to the formation of REUSY except that salts of magnesium, zinc or manganese is used in lieu of the rare earth metal salt used to form REUSY.

The unit cell size of a preferred fresh Y-zeolite is about 24.35 to 24.7 Å. The unit cell size (UCS) of zeolite can be measured by X-ray analysis under the procedure of ASTM D3942. There is normally a direct relationship between the relative amounts of silicon and aluminum atoms in the zeolite and the size of its unit cell. This relationship is fully described in Zeolite Molecular Sieves, Structural Chemistry and Use (1974) by D. W. Breck at Page 94. Although both the zeolite, per se, and the matrix of a fluid cracking catalyst usually contain both silica and alumina, the $SiO_2/Al_2O_3$ ratio of the catalyst matrix should not be confused with that of the zeolite. When an equilibrium catalyst is subjected to X-ray analysis, it only measures the UCS of the crystalline zeolite contained therein.

The unit cell size value of a Y zeolite also decreases as it is subjected to the environment of the FCC regenerator and reaches equilibrium due to removal of the aluminum atoms from the crystal structure. Thus, as the Y zeolite in the FCC inventory is used, its framework Si/Al atomic ratio increases from about 3:1 to about 30:1. The unit cell size correspondingly decreases due to shrinkage caused by the removal of aluminum atoms from the cell structure. The unit cell size of a preferred equilibrium Y zeolite is at least 24.22Å, preferably from 24.24 to 24.50Å, and more preferably from 24.24 to 24.40Å.

In general, the amount of additional zeolite-based cracking catalyst is in an amount sufficient to produce molecules in the gasoline range. For example, this invention can comprise about 15 to about 75% by weight additional zeolite, e.g., Y-type zeolite, with specific amounts depending on amount of activity desired. More typical embodiments comprise about 15 to about 60%, and even more typical embodiments comprise about 20 to about 45% additional zeolite-based cracking catalyst. Generally increasing the amount of, for example, Y zeolite, enhances gasoline yield, which in turn provides molecules for the pentasil to convert into olefins. In certain embodiments the invention contains additional zeolite in amounts such that gasoline produced by the additional zeolite is cracked further by the zeolite into olefins.

Although not preferred, the pentasil and additional zeolite-based cracking catalyst can be prepared to be in the same particle, also known as an integral catalyst particle. To prepare integral catalyst, matrix can be added to a blend of pentasil zeolite and Y-type zeolite at concentrations described earlier and the matrix/zeolite mixture is then spray dried to form particles in which both zeolites have become integrated. Another integrated embodiment could comprise incorporating separately prepared pentasil or Y-type zeolite particles into a spray drier feed for the other. In general, integral catalysts can exhibit reduced activity compared to a combination of separately prepared catalysts, and therefore are not typically preferred.

When making integrated particles it is sometimes desirable to minimize the contact that the additional zeolite-based catalyst has with phosphorus, e.g., when the additional zeolite is zeolite Y. Zeolite Y, for example, can be deactivated when contacted with increased levels of phosphorus. When preparing such embodiments, it is therefore generally preferred to stabilize the pentasil with phosphorus prior to incorporating it with the additional zeolite-based catalyst. In doings so, less amounts of phosphorus can be employed to make the final catalyst and such embodiments can generally contain 0.01 to no more than about 5% by weight phosphorus ($P_2O_5$) based on the total weight of the integrated catalyst.

*FCC Processes*

The catalyst of this invention is particularly suitable for use in conventional FCC processes where hydrocarbon feedstocks are cracked into lower molecular weight compounds, i.e., gasoline, in the absence of added hydrogen. Typical FCC processes entail cracking a hydrocarbon feedstock in a cracking reactor unit (FCCU) or reactor stage in the presence of fluid cracking catalyst particles to produce liquid and gaseous product streams. The product streams are removed and the catalyst particles are subsequently passed to a regenerator stage where the particles are regenerated by exposure to an oxidizing atmosphere to remove contaminant. The regenerated particles are then circulated back to the cracking zone to catalyze further hydrocarbon cracking. In this manner, an inventory of catalyst particles is circulated between the cracking stage and the regenerator stage during the overall cracking process.

The catalyst of this invention can be added to the FCCU without changing the mode of operating the aforementioned process. The catalyst may be added directly to the cracking stage, to the regeneration stage of the cracking apparatus or at any other suitable point. The catalyst may be added to the circulating catalyst particle inventory while the cracking process is underway or they may be present in the inventory at the start-up of the FCC operation. As an example, the compositions of this invention can be added to a FCCU when replacing existing equilibrium catalyst inventory with fresh catalyst. The replacement of equilibrium zeolite catalyst by fresh catalyst is normally done on a cost versus activity basis. The refiner usually balances the cost of introducing new catalyst to the inventory with respect to the production of desired hydrocarbon product fractions. Under FCCU reactor conditions carbocation reactions occur to cause molecular size reduction of the petroleum hydrocarbon feedstock introduced into the reactor. As fresh catalyst equilibrates within an FCCU, it is exposed to various conditions, such as the deposition of feedstock contaminants produced during that reaction and severe regeneration operating conditions. Thus, equilibrium catalysts may contain high levels of metal contaminants, exhibit somewhat lower activity, have lower aluminum atom content in the zeolite framework and have different physical properties than fresh catalyst. In normal operation, refiners withdraw small amount of the equilibrium catalyst from the regenerators and replace it with fresh catalyst to control the quality (e.g., its activity and metal content) of the circulating catalyst inventory.

When using this invention, a FCC unit can be run using conventional conditions, wherein the reaction temperatures range from about 400° to 700°C with regeneration occurring at temperatures of from about 500° to 900°C. The particular conditions depend on the petroleum feedstock being treated, the product streams desired and other conditions well known to refiners. For example, lighter feedstock can be cracked at lower temperatures. The catalyst (i.e., inventory) is circulated through the unit in a continuous manner between catalytic cracking reaction and regeneration while maintaining the equilibrium catalyst in the reactor. Certain embodiments of the invention have been shown to be effective in units operating at somewhat severe conditions.

The invention can be used in other cracking processes that employ pentasil-containing catalysts. While designed for use in FCC processes conducted at conventional conditions, the invention can be used in other sometimes much more severe operations. These processes include those known as Deep Catalytic Cracking (DCC), catalytic pyrolysis process (CPP), and Ultra Catalytic Cracking (UCC). Conditions for these processes, and typical FCC conditions, are listed in the table below.

|  | FCC | DCC | CPP | UCC |
|---|---|---|---|---|
| Temperature, °C | 500-550 | 505-575 | 560-650 | 550-570 |
| Cat./Oil | 5 to 10 | 9 to 15 | 15-25 | 18 to 22 |
| Pressure, atmospheres | 1 to 2 | 0.7 to 1.5 | 0.8 | 1 to 4 |
| Steam Dilution, wt% of feed | 1 to 5 | 10 to 30 | 30 to 50 | 20 to 35 |
| WHSV | 125-200 | 0.2-20 | NR* | 50 to 80 |
| *NR= not reported | | | | |

Those of ordinary skill in the art are familiar as to when such processes can be used with the invention. When the invention is used in such processes, certain modifications to the invention may be required, e.g., activity and attrition may require alteration, in order to optimize the compositions' effectiveness in those processes. Such modifications are known to those skilled in the art.

The invention can be used to crack a variety of hydrocarbon feedstocks. Typical feedstocks include in whole or in part, a gas oil (e.g., light, medium, or heavy gas oil) having an initial boiling point above about 120°C [250°F], a 50% point of at least about 315°C [600°F], and an end point up to about 850°C [1562°F]. The feedstock may also include deep cut gas oil, vacuum gas oil, thermal oil, residual oil, cycle stock, whole top crude, tar sand oil, shale oil, synthetic fuel, heavy hydrocarbon fractions derived from the destructive hydrogenation of coal, tar, pitches, asphalts, hydrotreated feedstocks derived from any of the foregoing, and the like. As will be recognized, the distillation of higher boiling petroleum fractions above about 400°C must be carried out under vacuum in order to avoid thermal cracking. The boiling temperatures utilized herein are expressed in terms of convenience of the boiling point corrected to atmospheric pressure. Even high metal content resids or deeper cut gas oils having an end point of up to about 700°C can be cracked using the invention.

While improvement in propylene yields vary with feedstock and FCC conditions, employing the invention in conventionally run FCC units running on typical feedstock and at 75% conversion can result in improved propylene yield of at least 0.1% based on feedstock, preferably at least 3% and most preferably at least 7% compared to processes using catalyst that does not contain the invention. LPG yields from processes using the invention can be at least 0.1% by weight of feedstock, preferably at least 5% and most preferably at least about 12% by weight higher compared to processes using catalyst that does not contain the invention. More unexpectedly the invention is more selective for propylene than other catalysts. The invention has been shown to increase selectivity of propylene, defined as propylene yield per unit LPG by at least 2% relative to a catalyst that does not contain the invention, thereby allowing a refinery with a given LPG capacity for its wet gas compressor an option to increase propylene production without adding another compressor. These yields can therefore be achieved without significantly increasing capital expenditure to modify a conventional FCC unit, nor require running the unit at extremely severe conditions. The aforementioned yield data is based on tests run on a Davison Circulating Riser, the operating conditions of which are described later below.

To further illustrate the present invention and the advantages thereof, the following specific examples are given. The examples are given for illustrative purposes only and are not meant to be a limitation on the claims appended hereto. It should be understood that the invention is not limited to the specific details set forth in the examples.

All parts and percentages in the examples, as well as the remainder of the specification, which refers to solid compositions or concentrations, are by weight unless otherwise specified. However, all parts and percentages in the examples as well as the remainder of the specification referring to gas compositions are molar or by volume unless otherwise specified.

Further, any range of numbers recited in the specification or claims, such as that representing a particular set of properties, units of measure, conditions, physical states or percentages, is intended to literally incorporate expressly herein by reference or otherwise, any number falling within such range, including any subset of numbers within any range so recited.

The following is a list of definitions for abbreviations appearing in the examples below

ABD means average bulk density.
wt. means weight.
cc means cubic centimeter.
g means gram.
APS means average particle size.
DI means Davison Index as defined earlier.
LPG means liquefied petroleum gas.
L means liter.

min means minute.
API Gravity means American Petroleum Institute Gravity.
K Factor means the UOP Watson K Factor.
RON means Research Octane Number.
LCO means light cycle oil.
MON means Motor Octane Number.
FBP means final boiling point.
IBP means initial boiling point.
Re means rare earth.

EXAMPLES

**Example 1 (Base)**

A ZSM-5 catalyst was prepared as follows. ZSM-5 (4000g dry basis) was slurried up in 12,000g of deionized water. To this slurry was added aluminum chlorohydrol (200 grams $Al_2O_3$ dry basis), 400g (dry basis) of Catapal-B™ alumina, 4200g (dry basis) of kaolin clay and 1200g of $P_2O_5$ from concentrated (85%) $H_3PO_4$. The slurry was mixed in a high shear mixer, milled in a 4L Drais media mill at 1 L/min and then spray dried. The Bowen spray dryer was operated at a 400°C inlet temperature and a 150°C outlet temperature. The spray dried catalyst was calcined for 40 minutes at 593°C. This sample is designated Catalyst A and its properties are shown in Table 1.

**Example 2 (1% $Fe_2O_3$)**

A 1wt% $Fe_2O_3$ containing ZSM-5 catalyst was prepared as follows. $Fe_2O_3$ powder (50g) was slurried up in 5430g of deionized water. To this mixture was added 600g of $P_2O_5$ from concentrated (85%) $H_3PO_4$, 2000g (dry basis) of ZSM-5, 100g $Al_2O_3$ (dry basis) from aluminum chlorohydrol, 200g (dry basis) of Catapal B alumina and 2050 g (dry basis) of kaolin clay. The slurry was mixed in a high shear mixer, milled in a 4L Drais media mill at 1 L/min and then spray dried. The Bowen spray dryer utilized a 400°C inlet temperature and a 150°C outlet temperature. The spray dried catalyst was calcined for 40 minutes at 593°C. This sample is designated Catalyst B and its properties are shown in Table 1.

**Example 3 (10% $Fe_2O_3$)** (not according to the invention)

Catalyst C, with 10wt% $Fe_2O_3$, was prepared in the same manner as Example 2 with the exception that 500 grams of $Fe_2O_3$ powder was used and the amount of kaolin clay was lowered to 1600g. The properties of Catalyst C are shown in Table 1.

**Example 4**

The catalysts in Examples 1-3 were tested in an ACE unit to determine their relative activities for producing propylene and LPG. The catalysts were steam deactivated for 24 hours at 816°C, 100% steam and blended at a 5% by weight level with a zeolite Y-containing Aurora™ cracking catalyst (available from W.R. Grace & Co.-Conn.), which had been separately steamed for 4 hours at 816°C [1500°F], 100% steam. The catalysts blends were tested in an ACE Model AP Fluid Bed Microactivity unit at 527°C. Several runs were carried out for each catalyst using catalyst to oil ratios of between 3 and 10. The catalyst to oil ratio was varied by changing the catalyst weight and keeping the feed weight constant. The feed weight utilized for each run was 1.5g and the feed injection rate was 3.0 g/minute. The properties of the feed are shown in Table 4. The interpolated propylene and LPG yields for the catalyst blend at a constant conversion of 77% are shown in Table 1. As can be seen, the invention (Catalysts B and C) containing added iron oxide increased the production of propylene and LPG relative to the base Catalyst A.

Table 1

| Analysis | Base Catalyst A | Catalyst B | Catalyst C |
|---|---|---|---|
| $Al_2O_3$, wt% | 25.2 | 25.2 | 22.2 |
| $Na_2O$, wt% | 0.1 | 0.17 | 0.12 |
| $P_2O_5$, wt% | 12.15 | 11.87 | 11.93 |
| $Fe_2O_3$, wt% | 0.66 | 1.6 | 10.12 |
| APS, micron | 74 | 65 | 58 |
| ABD, g/cc | 0.68 | 0.70 | 0.72 |

(continued)

| Analysis | Base Catalyst A | Catalyst B | Catalyst C |
|---|---|---|---|
| DI | 6 | 5 | 12 |
| Surface Area, $m^2/g$ | 134 | 131 | 139 |
| **24 Hrs. @ 816°C [1500°F] 100% Steam** | | | |
| Conversion = 77% | | | |
| Wt% Propylene | 7.28 | 7.44 | 8.30 |
| Wt% LPG | 21.43 | 21.58 | 23.23 |

**Example 5 (Base Catalyst)**

A ZSM-5 catalyst was prepared by making a slurry of 1364 grams (1200 grams dried basis) of ZSM-5 and 171 grams (120 grams dry basis) of Catapal B alumina in water to 32 wt% solids. To the slurry was added 279 grams (60 grams dry basis) of aluminum chlorohydrol, 1482 grams (1260 grams dry basis) of kaolin clay and 578 grams of concentrated $H_3PO_4$. The slurry was milled in a 4-liter Drais media mill at 1.2 liters/min. and then spray dried. The Bowen spray dryer was operated with a 400°C inlet temperature and a 150°C outlet temperature. The spray dried catalyst was calcined for 2 hours at 593°C. The properties of Catalyst D are shown in Table 2.

**Example 6 (2% $Fe_2O_3$ from $FeCl_2$)**

Catalyst E, with 2wt% added $Fe_2O_3$, was prepared in the same manner as Example 5 with the exception that 149 grams of $FeCl_2 \cdot 4H_2O$ (60 grams $Fe_2O_3$ basis) was added to the slurry and the amount of kaolin clay was lowered to 1412 grams. The properties of Catalyst E are shown in Table 2.

**Example 7 (4% $Fe_2O_3$ from $FeCl_2$)**

Catalyst F, with 4wt% added $Fe_2O_3$, was prepared in the same manner as Example 5 with the exception that 299 grams of $FeCl_2 \cdot 4H_2O$ (120 grams $Fe_2O_3$ basis) was added to the slurry and the amount of kaolin clay was lowered to 1341 grams. The properties of Catalyst F are shown in Table 2.

**Example 8**

The catalysts in Examples 5-7 were tested in an ACE unit to determine their relative activities for producing propylene and LPG. The ZSM-5 catalysts were steam deactivated for 24 hours at 816°C, 100% steam and blended at 5% by weight with an Aurora™ cracking catalyst (available from W.R. Grace & Co.-Conn), which had been separately steamed for 4 hours at 816°C [1500°F], 100% steam. The catalysts blends were tested in an ACE Model AP Fluid Bed Microactivity unit at 527°C. Several runs were carried out for each catalyst using catalyst to oil ratios of between 3 and 10. The catalyst to oil ratio was varied by changing the catalyst weight and keeping the feed weight constant. The feed weight utilized for each run was 1.5g and the feed injection rate was 3.0 g/minute. The properties of the Feed are shown in Table 4. The interpolated propylene and LPG yields for the catalyst blends at a constant conversion of 77% are shown in Table 2. The data shows that the catalyst with added $Fe_2O_3$ (from $FeCl_2$) increased the production of propylene and LPG as compared to the base catalyst D.

**Table 2**

| Analysis | Base Catalyst D | Catalyst E (2% $Fe_2O_3$) | Catalyst F (4% $Fe_2O_3$) |
|---|---|---|---|
| $Al_2O_3$, wt% | 25.85 | 24.90 | 24.15 |
| $Na_2O$, wt% | 0.16 | 0.13 | 0.13 |
| $P_2O_5$, wt% | 11.96 | 12.12 | 12.18 |
| $Fe_2O_3$, wt% | 0.73 | 2.40 | 4.37 |
| DI | 8 | 6 | 4 |
| ABD g/cc | 0.68 | 0.71 | 0.74 |
| Surface Area, $m^2/g$ | 136 | 140 | 144 |
| APS, micron | 86 | 75 | 81 |

(continued)

**24 Hour @ 816°C[1500°F], 100% Steam**

| | | | |
|---|---|---|---|
| Conversion = 77% | | | |
| Wt% Propylene | 7.29 | 7.85 | 7.76 |
| Wt% LPG | 21.44 | 22.49 | 22.13 |

**Example 9**

A 70% ZSM-5 catalyst containing iron was prepared as follows. ZSM-5 (5820g dry basis) was slurried up in water at 48% by weight solids. To the ZSM-5 slurry, 446g of Iron II chloride tetrahydrate was added. The slurry was mixed well and then spray dried in a Bowen spray dryer. The resulting product was calcined for 2 hours at 537°C. The product contained 2.8% $Fe_2O_3$. The calcined $Fe_2O_3$ containing ZSM-5 (1444g dry basis) was slurried in water with 80g (dry basis) Catapal B alumina, 176g (dry basis) Natka clay, 174g aluminum chlorohydrol (23% solids), and 494g of concentrated phosphoric acid. The slurry was mixed well and then milled in a 4L Drais media mill at 1 L/min. The slurry was spray dried in a Bowen spray dryer. The Bowen spray dryer was operated with a 400°C inlet temperature and a 150°C outlet temperature. The spray dried catalyst was calcined for 2 hours at 593°C. This catalyst is designated as Catalyst G. The properties are shown in Table 3.

**Table 3**

| Property | Catalyst G |
|---|---|
| Surface Area | 177 $m^2$/g |
| Surface Area-Zeolite | 153 $m^2$/g |
| Surface Area-Matrix | 25 $m^2$/g |
| | |
| $Al_2O_3$ | 13.651 wt% |
| $Fe_2O_3$ | 2.334 wt% |
| $Na_2O$ | 0.133 wt% |
| $P_2O_5$ | 15 wt% |

**Example 10**

Catalysts D and G were tested as blends with Aurora™ cracking catalyst, a commercially available FCC catalyst from W. R. Grace & Co.-Conn., in an ACE Model AP Fluid Bed Microactivity unit at 527°C. The Catalysts D and G were steam deactivated in a fluidized bed reactor for 24 hours at 816°C in a 100% steam atmosphere before they were blended at a 1wt% ZSM-5 level with steam deactivated Aurora cracking catalyst. Testing the catalysts at constant ZSM-5 level gives a normalized measurement of the activity of Catalyst D and G, which contain different levels of ZSM-5. The catalyst blends were tested in an ACE Model AP Fluid Bed Microactivity unit at 527°C. Several runs were carried out for each catalyst using catalyst to oil ratios of between 3 and 10. The catalyst to oil ratio was varied by changing the catalyst weight and keeping the feed weight constant. The feed weight utilized for each run was 1.5g and the feed injection rate was 3.0 g/minute. The ACE hydrocarbon yields were interpolated to constant conversion to compare the catalysts. The properties of the feed are shown in Table 4.

**Table 4**

| | |
|---|---|
| API Gravity | 25.5 |
| K Factor | 11.94 |
| Sulfur | 0.369 |
| Total Nitrogen | 0.12 |
| Conradson Carbon | 0.68 |
| | |
| **Simulated Distillation, Vol.%** | |
| IBP | 153°C [307°F] |
| 10% | 319°C [607°F] |
| 30% | 393°C [740°F] |

(continued)

| Simulated Distillation, Vol.% | |
|---|---|
| 50% | 437°C [818°F] |
| 70% | 484°C [904°F] |
| 90% | 556°C [1034°F] |
| FBP | 680°C [1257°F] |

The ACE data (Table 5) shows that Catalyst G, with more than 1% added iron, makes 25% more propylene than Catalyst D, which does not contain more than 1% added iron.

Table 5

| | Base Catalyst | Catalyst D | Catalyst G |
|---|---|---|---|
| Conversion | 76.00 | 76.00 | 76.00 |
| Cat-to-Oil Ratio | 6.76 | 6.42 | 5.90 |
| Hydrogen, wt% | 0.10 | 0.09 | 0.09 |
| Total Dry Gas, wt% | 4.28 | 4.01 | 4.01 |
| Propylene, wt% | 6.33 | 8.20 | 8.70 |
| Total C3's, wt% | 7.21 | 9.25 | 9.77 |
| Total C4='s, wt% | 8.04 | 9.33 | 9.73 |
| Total C4's, wt% | 12.74 | 14.69 | 15.06 |
| Total Wet Gas, wt% | 24.23 | 27.95 | 28.85 |
| C5+ Gasoline, wt% | 48.73 | 45.09 | 44.38 |
| RON | 92.56 | 93.96 | 93.87 |
| MON | 80.76 | 81.62 | 81.62 |
| LCO, wt% | 18.07 | 18.38 | 18.38 |
| Bottoms, wt% | 5.93 | 5.62 | 5.62 |
| Coke, wt% | 3.04 | 2.96 | 2.77 |

**Example 11**

A series of 70% by weight ZSM-5-containing catalysts were prepared with a range of iron and phosphorus levels. The catalysts were all prepared by the following method. ZSM-5, aluminum chlorohydrol, Catapal B alumina, Natka clay, iron II chloride tetrahydrate, and phosphoric acid were slurried together in water at a 40-45% solids level. Catapal B and aluminum chlorohydrol provided 4 wt% (dry basis) and 2 wt% (dry basis), respectively, of total catalyst composition. The slurry was milled in a 4L Drais media mill at 1 L/min. and then spray dried in a Bowen spray dryer. The spray dryer operated with a 400°C inlet temperature and a 150°C outlet temperature. The product was calcined for 2 hours at 537°C.

The formulations of the catalysts, prepared in this manner, are outlined below:

(a) Catalyst H: 70% ZSM-5/1% $Fe_2O_3$/12.1% $P_2O_5$
(b) Catalyst I: 70% ZSM-5/1% $Fe_2O_3$/13.1% $P_2O_5$
(c) Catalyst J: 70% ZSM-5/1% $Fe_2O_3$/14.1% $P_2O_5$
(d) Catalyst K: 70% ZSM-5/2.5% $Fe_2O_3$/12% $P_2O_5$
(e) Catalyst L: 70% ZSM-5/2.5% $Fe_2O_3$/13.5% $P_2O_5$
(f) Catalyst M: 70% ZSM-5/2.5% $Fe_2O_3$/15% $P_2O_5$
(g) Catalyst N: 70% ZSM-5/4% $Fe_2O_3$/13% $P_2O_5$
(h) Catalyst O: 70% ZSM-5/4% $Fe_2O_3$/14.5% $P_2O_5$
(i) Catalyst P: 70% ZSM-5/4% $Fe_2O_3$/16% $P_2O_5$

The properties of the catalysts are shown in Table 6.

**Table 6**

| Property | Units | Catalyst H | Catalyst I | Catalyst J | Catalyst K | Catalyst L | Catalyst M | Catalyst N | Catalyst O | Catalyst P |
|---|---|---|---|---|---|---|---|---|---|---|
| Surface Area | m$^2$/g | 265 | 235 | 223 | 256 | 236 | 220 | 252 | 234 | 220 |
| Surface Area-Zeolite | m$^2$/g | 221 | 206 | 191 | 221 | 206 | 198 | 214 | 208 | 195 |
| Surface Area-Matrix | m$^2$/g | 44 | 29 | 32 | 35 | 30 | 22 | 38 | 27 | 25 |
| $Al_2O_3$ | wt% | 14.704 | 13.449 | 13.613 | 13.534 | 13.219 | 12.473 | 12.283 | 12.403 | 11.465 |
| $Fe_2O_3$ | wt% | 1.338 | 1.209 | 1.301 | 2.607 | 2.659 | 2.649 | 3.994 | 4.151 | 4.12 |
| $Na_2O$ | wt% | 0.155 | 0.147 | 0.14 | 0.137 | 0.133 | 0.125 | 0.141 | 0.14 | 0.119 |
| $P_2O_5$ | wt% | 10.426 | 12.443 | 14.061 | 11.361 | 13.002 | 14.717 | 12.796 | 13.668 | 15.546 |

**Example 12**

Catalysts D and H-P were tested as blends with Aurora™, a catalyst from W.R. Grace & Co.-Conn., in an ACE Model AP Fluid Bed Microactivity unit at 527°C. The ZSM-5 catalysts were steam deactivated in a fluidized bed reactor for 24 hours at 816°C in a 100% steam atmosphere before they were blended at a 2 wt% ZSM-5 level with steam deactivated Aurora™ catalyst. Testing the catalysts at constant ZSM-5 level gives a normalized measurement of the activity of Catalyst D and Catalysts H-P, which contain different levels of ZSM-5. The ACE runs were carried out as described in Example 3. The ACE data (Table 7) shows that Catalysts H-P, with more than 1% added iron, produce higher levels of propylene than those produced by Catalyst D, which does not contain more than 1% added iron.

## Table 7

| | Catalyst H | Catalyst I | Catalyst J | Catalyst K | Catalyst L | Catalyst M | Catalyst N | Catalyst O | Catalyst P | Catalyst D | Base Catalyst |
|---|---|---|---|---|---|---|---|---|---|---|---|
| Conversion, wt% | 73 | 73 | 73 | 73 | 73 | 73 | 73 | 73 | 73 | 73 | 73 |
| Cat-to-Oil Ratio | 5.80 | 6.33 | 5.71 | 5.53 | 5.88 | 5.25 | 5.91 | 5.68 | 5.70 | 5.64 | 5.76 |
| Hydrogen, wt% | 0.06 | 0.05 | 0.05 | 0.05 | 0.06 | 0.05 | 0.06 | 0.05 | 0.05 | 0.05 | 0.05 |
| Ethylene, wt% | 0.62 | 0.77 | 0.68 | 0.65 | 0.75 | 0.80 | 0.70 | 0.67 | 0.88 | 0.61 | 0.49 |
| Total Dry Gas, wt% | 1.51 | 1.72 | 1.54 | 1.51 | 1.62 | 1.66 | 1.56 | 1.52 | 1.74 | 1.47 | 1.41 |
| Propylene, wt% | 7.72 | 8.73 | 8.22 | 7.80 | 8.33 | 8.76 | 7.93 | 7.98 | 9.08 | 7.60 | 4.83 |
| Total C3's, wt% | 8.65 | 10.18 | 9.23 | 8.76 | 9.41 | 9.82 | 8.94 | 8.92 | 10.24 | 8.53 | 5.57 |
| Total C4='s, wt% | 9.42 | 9.71 | 9.36 | 9.18 | 9.29 | 9.43 | 8.99 | 9.27 | 9.51 | 9.15 | 7.31 |
| Total C4's, wt% | 14.58 | 15.56 | 14.70 | 14.33 | 14.85 | 14.77 | 14.35 | 14.27 | 15.20 | 14.24 | 11.76 |
| LPG, wt% | 23.23 | 25.74 | 23.93 | 23.09 | 24.26 | 24.59 | 23.29 | 23.19 | 25.44 | 22.77 | 17.33 |
| Total Wet Gas, wt% | 24.74 | 27.95 | 25.47 | 24.60 | 25.89 | 26.25 | 24.85 | 24.71 | 27.18 | 24.24 | 18.74 |
| C5+ Gasoline, wt% | 45.26 | 41.65 | 44.50 | 45.57 | 43.80 | 43.76 | 45.09 | 44.79 | 43.05 | 46.00 | 51.45 |
| RON | 93.64 | 93.66 | 93.89 | 93.70 | 93.82 | 93.76 | 93.66 | 93.68 | 93.73 | 93.73 | 92.10 |
| MON | 80.88 | 80.22 | 81.09 | 80.92 | 81.17 | 80.99 | 81.03 | 80.85 | 81.08 | 81.00 | 79.96 |
| LCO, wt% | 20.76 | 20.78 | 20.52 | 20.60 | 20.55 | 20.41 | 20.48 | 20.57 | 20.38 | 20.45 | 20.63 |
| Bottoms, wt% | 6.24 | 6.22 | 6.48 | 6.40 | 6.45 | 6.59 | 6.52 | 6.43 | 6.62 | 6.55 | 6.37 |
| Coke, wt% | 3.01 | 3.40 | 3.04 | 2.83 | 3.32 | 3.00 | 3.07 | 3.50 | 2.78 | 2.76 | 2.81 |

**Example 13 (Catalyst R)**

An $Fe_2O_3$ and $P_2O_5$ stabilized ZSM-5 catalyst was prepared as follows. Ferric oxide (250 g) was mixed into 5453 g of deionized water. Subsequently, 1218 g of concentrated $H_3PO_4$ (85% solution), 2000 g (dry basis) of ZSM-5, 91 g (dry basis) of aluminum chlorohydrol, 200 g (dry basis) of Catapal B™ alumina and 1700 g (dry basis) of kaolin clay were added to make up the slurry. The slurry was then milled in a 4-liter Drais media mill at 1.2 liters/min and spray dried in a Bowen spray dryer. The spray dryer operated with a 400°C inlet temperature and a 150°C outlet temperature. The product was calcined for 2 hours at 593°C. The sample was designated Catalyst R and its properties are shown in Table 8.

A base FCC cracking catalyst and two ZSM-5 catalysts (Catalyst R and OlefinsUltra™, a 40% by weight ZSM-5-containing additive from W.R. Grace & Co.-Conn. that contains less than 1% iron, designated as Catalyst Q) were deactivated in the following manner before testing. The base cracking catalyst used is Libra™ cracking catalyst (available from W.R. Grace & Co.-Conn.), which was first impregnated to incipient wetness targeting 1000 ppm Ni and 1000 ppm V with solutions of 3% vanadium naphthenate in pentane and 8% nickel octoate in pentane respectively. The sample was pretreated in a muffle prior to the impregnation step and post-treated after the impregnation step to burn off the solvents. Both the pretreatment and post-treatment procedures included a drying step (204°C for 1 hour) and a calcination step (593°C for 3 hours). The treated sample was then deactivated for 20 hours at 788°C using the Cyclic Propylene Steaming method (CPS). The description of the CPS method has been published in L. T. Boock, T. F. Petti, and J. A Rudesill, "Contaminant-Metal Deactivation and Metal-Dehydrogenation Effects During Cyclic Propylene Steaming of Fluid Catalytic Cracking Catalysts," Deactivation and Testing of Hydrocarbon Processing Catalysts, ACS Symposium Series 634, p. 171 (1996), ISBN 0-8412-3411-6. Catalysts Q and R were separately deactivated hydrothermally in a fluidized bed steamer for 24 hours at 816°C without any added Ni or V.

About 70 wt.% of the CPS-deactivated Libra cracking catalyst was blended with 30% of the separately deactivated OlefinsUltra™ catalyst. Similarly, a 70/30 blend and an 85/15 blend were made using CPS-deactivated Libra cracking catalyst and separately deactivated Catalyst R respectively. The properties of the fresh and deactivated Libra catalyst, OlefinsUltra™ catalyst (Catalyst Q) and Catalyst R are reported in Table 8.

**Table 8**

| | | Base Catalyst | Catalyst Q[1] | Catalyst R |
|---|---|---|---|---|
| **FRESH PROP ERTIES** | | | | |
| $Al_2O_3$ | (wt.%) | 48.7 | 27.7 | 22.4 |
| $SiO_2$ | (wt.%) | 48.0 | 60.5 | 56.8 |
| $Re_2O_3$ | (wt.%) | 2.03 | 0.03 | 0.03 |
| $Na_2O$ | (wt.%) | 0.32 | 0.27 | 0.12 |
| $SO_4$ | (wt.%) | 0.10 | 0.10 | <0.01 |
| $TiO_2$ | (wt.%) | 0.49 | 0.78 | 0.74 |
| $Fe_2O_3$ | (wt.%) | 0.41 | 0.60 | 5.46 |
| $P_2O_5$ | (wt.%) | 0.04 | 10.92 | 15.01 |
| **Surface Area** | | | | |
| Total | ($m^2$/g) | 364 | 145 | 112 |
| Zeolite | ($m^2$/g) | 278 | 123 | 100 |
| **DEACTIVATED PROPERTIES** | | | | |
| | | 1000/1000 ppm Ni/V CPS 787°C [1450°F] | 24 hrs/816°C [1500°F] 100% stm | 24 hrs/816°C [1500°F] 100% stm |
| Nickel (Ni) | ppm | 838 | 21 | 50 |
| Vanadium (V) | ppm | 990 | 50 | 40 |
| **Surface Area** | | | | |
| Total | ($m^2$/g) | 229 | 130 | 125 |
| Zeolite | ($m^2$/g) | 165 | 87 | 94 |

(continued)

**Surface Area**

| | | | | |
|---|---|---|---|---|
| Cell Size | Å | 24.29 | - | - |

[1] OlefinsUltra™ , 40% by weight ZSM-5-containing additive from W.R. Grace & Co.-Conn. that contains less than 1% iron.

The performance evaluation of the above steam-deactivated catalysts in an FCC unit was conducted by using the Davison Circulating Riser (DCR). The description and operation of this unit has been discussed in detail in the following publications: 1) G. W. Young, G. D. Weatherbee, and S. W. Davey, "Simulating Commercial FCCU yields with the Davison Circulating Riser (DCR) pilot plant unit," National Petroleum Refiners Association (NPRA) Paper AM88-52; and 2) G. W. Young, "Realistic Assessment of FCC Catalyst Performance in the Laboratory," in Fluid Catalytic Cracking: Science and Technology, J. S. Magee and M. M. Mitchell, Jr. Eds., Studies in Surface Science and Catalysis, Volume 76, p. 257, Elsevier Science Publishers B.V., Amsterdam 1993, ISBN 0-444-89037-8.

A blend of two commercial FCC feeds with the properties shown in Table 9 was used for the test. In each of the experiments, the DCR was operated under "full burn" regeneration conditions, where "full burn" is defined as the condition wherein the amount of air added to the regenerator is sufficient to convert all the coke species on the spent FCC catalyst to $CO_2$.

The DCR was charged initially with approximately 2000 g of each catalyst blend. The conditions used were a riser top temperature of 545°C, a regenerator temperature of 727°C with 1% excess $O_2$ in the regenerator (and operating in full burn mode). The conversion to useful products, was varied by changing the feed preheat temperature prior to introduction into the unit. Steady state yields were determined at each conversion for all the catalysts.

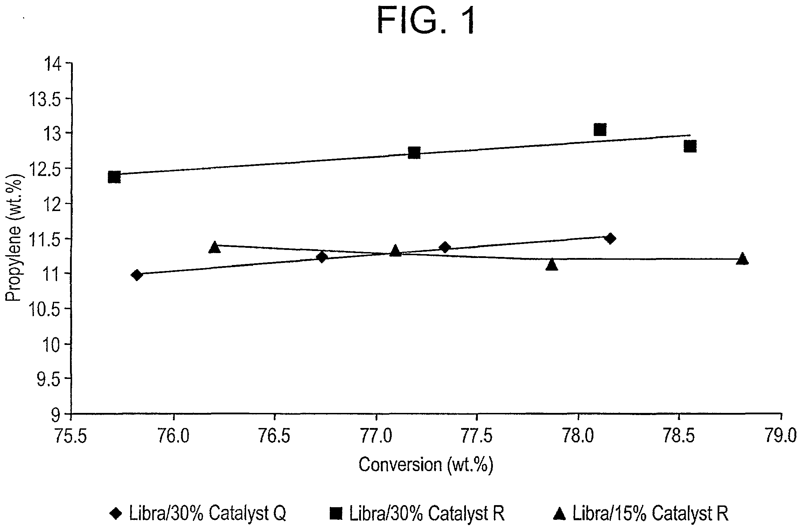

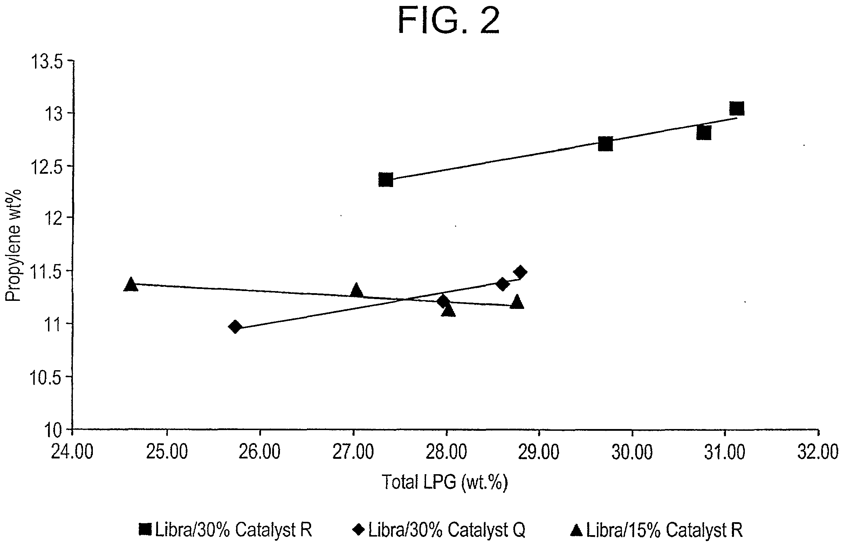

As can be observed in Table 10, and Figures 1 and 2, Catalyst-containing 30% Catalyst R shows significantly higher C3 light olefin yields at constant conversion (Figure 1) and higher propylene yield versus LPG (Figure 2) than Libra Catalyst-containing 30% Catalyst Q (OlefinsUltra™). Catalyst-containing 30% Catalyst Q and Catalyst-containing 15% by weight Catalyst R, show slightly different propylene yields at constant LPG, but the latter Catalyst has less than half of the ZSM-5 present than present in the former. This data set shows that the iron-containing ZSM-5 catalyst (Catalyst R) has much better propylene activity and produces a higher propylene to butylene ratio than the ZSM-5 catalyst without added $Fe_2O_3$ (Catalyst Q).

**Table 9**

| API Gravity | 24.2 |
|---|---|
| K Factor | 11.95 |
| Sulfur | 0.373 |
| Total Nitrogen | 0.08 |
| Conradson Carbon | 0.91 |

**Simulated Distillation, Vol.%**

| IBP | 227°C [441°F] |
|---|---|
| 10% | 362°C [683°F] |
| 30% | 411°C [772°F] |
| 50% | 447°C [837°F] |
| 70% | 487°C [909°F] |
| 90% | 548°C [1018°F] |
| FBP | 623°C [1154°F] |

**Table 10**

| | 30% Catalyst Q | 30% Catalyst R | 15% Catalyst R |
|---|---|---|---|
| Conversion at 78% | | | |
| $H_2$ Yield wt% | 0.08 | 0.09 | 0.08 |
| $CH_4$ Yield wt% | 1.01 | 0.94 | 0.99 |
| C2 wt% | 0.64 | 0.60 | 0.62 |
| C2= wt% | 1.40 | 1.69 | 1.36 |
| Total C3 wt% | 12.64 | 14.14 | 12.30 |

(continued)

| | 30% Catalyst Q | 30% Catalyst R | 15% Catalyst R |
|---|---|---|---|
| Conversion at 78% | | | |
| C3= wt% | 11.47 | 12.90 | 11.19 |
| Total C4 wt% | 16.19 | 16.54 | 15.97 |
| Total C4= wt% | 11.90 | 12.28 | 11.89 |
| C3=/Total C4= | 0.96 | 1.05 | 0.94 |
| LPG (wt.%) | 28.83 | 30.68 | 28.27 |
| Gasoline wt% | 41.93 | 39.72 | 42.53 |
| Research Octane Number | 96.15 | 96.54 | 96.31 |
| LCO wt% | 16.01 | 15.87 | 16.05 |
| Bottoms wt% | 5.99 | 6.13 | 5.95 |
| Coke wt% | 4.01 | 4.19 | 4.05 |

**Claims**

1. A fluidizable particulate catalyst composition comprising:

    (a) pentasil zeolite having a silica/alumina framework,
    (b) 10 to 24 percent by weight phosphorus, measured as $P_2O_5$,
    (c) 1 to 10 percent by weight iron, measured as $Fe_2O_3$, present outside the pentasil framework, and
    (d) matrix,

    wherein the amount of phosphorus and iron oxide above are based on the amount of particles containing the pentasil zeolite and the composition has an average particle size in the range of 20 to 200 microns and a Davison Attrition Index (DI) of less than 10.

2. A catalyst composition according to claim 1 wherein iron phosphate is present in the matrix.

3. A catalyst composition according to claim 1 further comprising an additional zeolite suitable for cracking hydrocarbons in a fluidized catalytic cracking process.

4. A catalyst composition according to claim 3 wherein said additional zeolite is faujasite.

5. A catalyst composition according to claim 3 wherein the additional zeolite is selected from Y zeolite, REY, REUSY, and mixtures thereof.

6. A catalyst composition according to claim 3 wherein the additional zeolite is present in particles separate from particles comprising the pentasil zeolite.

7. A catalyst composition according to claim 1 or claim 5 wherein the pentasil zeolite is ZSM-5 or ZSM-11.

8. A catalyst composition according to claim 7 wherein the catalyst composition comprises at least 15% by weight Y zeolite, preferably 15% to 60% by weight Y zeolite, preferably 25% to 40% by weight Y zeolite, said amount of Y zeolite being based on the total catalyst composition.

9. A catalyst composition according to claim 6 wherein the phosphorus is present in the particles containing the pentasil zeolite.

10. A catalyst composition according to claim 9 wherein the pentasil containing particles comprise at least 8% by weight phosphorus, preferably at least 10% by weight phosphorus.

11. A catalyst composition according to claim 9 wherein the pentasil-containing particles comprise a matrix and iron phosphate in the present matrix.

12. A catalyst composition according to claim 6 wherein the iron oxide is present in an amount ranging from 1 to 10% by weight of the particles containing the pentasil zeolite.

13. A catalyst composition according to claim 6 or claim 12 wherein iron oxide is present in the pentasil-containing particles.

14. A catalytic cracking process comprising:

   (a) introducing a hydrocarbon feedstock into a reaction zone of a catalytic cracking unit comprised of a reaction zone, stripping zone, and a regeneration zone, which feedstock is characterised as having an initial boiling point from 120°C with end points up to 850°C;
   (b) catalytically cracking said feedstock in said reaction zone at a temperature from 400°C to 700°C, by causing the feedstock to be in contact with a fluidizable cracking catalyst comprising;

      (i) pentasil zeolite having a silica/alumina framework,
      (ii) 10 to 24 percent by weight phosphorus, measured as $P_2O_5$,
      (iii) 1 to 10 percent by weight iron, measured as $Fe_2O_3$, present outside the pentasil framework, and
      (iv) matrix,

   wherein the amounts of phosphorus and iron oxide are based on the amount of particles containing pentasil zeolite and the catalyst composition has a Davison Attrition Index (DI) of less than 10;
   (c) stripping recovered used catalyst particles with a stripping fluid in a stripping zone to remove therefrom some hydrocarbonaceous material; and
   (d) recovering stripped hydrocarbonaceous material from the stripping zone and circulating stripped used catalyst particles to the regenerator or regeneration zone; and regenerating said cracking catalyst in a regeneration zone by burning-off a substantial amount of coke on said catalyst, and with any added fuel component to maintain the regenerated catalyst at a temperature which will maintain the catalytic cracking reactor at a temperature from 400°C to 700°C; and
   (e) recycling said regenerated hot catalyst to the reaction zone.

15. A process according to claim 14 wherein the fluidizable cracking catalyst is a composition according to any one of claims 1 to 13.

16. A process according to claim 14 wherein the cracking catalyst comprises an additional zeolite suitable for cracking hydrocarbons in a fluidized catalytic cracking process, the additional zeolite comprising at least 15% by weight, preferably 15 to 60% by weight, preferably 25% to 45% by weight based on the total fluidizable cracking catalyst.

17. A process according to claim 14 wherein the cracking catalyst comprises an additional zeolite suitable for cracking hydrocarbons in a fluidized catalytic cracking process and the pentasil zeolite is ZSM-5 or ZSM-11.

18. A process according to claim 14 wherein the cracking catalyst comprises an additional zeolite suitable for cracking hydrocarbons in a fluidized catalytic cracking process and phosphorus is present in the particles containing the pentasil zeolite.

19. A process according to claim 14 wherein said feedstock is catalytically cracked in said reaction zone at a temperature from 500 to 550°C.


**Patentansprüche**

1. Fluidisierbare partikelförmige Katalysatorzusammensetzung, umfassend:

   (a) Pentasil-Zeolith mit einem Silica/Aluminiumoxid-Gerüst,
   (b) 10 bis 24 Gewichtsprozent Phosphor, gemessen als $P_2O_5$,
   (c) 1 bis 10 Gew.-% Eisen, gemessen als $Fe_2O_3$, das außerhalb des Pentasil-Gerüsts vorhanden ist, und
   (d) Matrix,

   wobei die Menge an Phosphor und Eisenoxid oben auf der Menge an Partikeln basiert, die den Pentasil-Zeolith enthalten, und die Zusammensetzung eine durchschnittliche Partikelgröße im Bereich von 20 bis 200 Mikron und einen Davison Attrition Index (DI) von weniger als 10 aufweist.

2. Katalysatorzusammensetzung nach Anspruch 1, wobei Eisenphosphat in der Matrix vorhanden ist.

3. Katalysatorzusammensetzung nach Anspruch 1, ferner umfassend einen zusätzlichen Zeolith, der zum Cracken von Kohlenwasserstoffen in einem fluidisierten katalytischen Crackverfahren geeignet ist.

4. Katalysatorzusammensetzung nach Anspruch 3, wobei der zusätzliche Zeolith Faujasit ist.

5. Katalysatorzusammensetzung nach Anspruch 3, wobei der zusätzliche Zeolith ausgewählt ist aus Y-Zeolith, REY, REUSY und Gemischen davon.

6. Katalysatorzusammensetzung nach Anspruch 3, wobei der zusätzliche Zeolith in Partikeln vorhanden ist, die von Partikeln getrennt sind, die den Pentasil-Zeolith umfassen.

7. Katalysatorzusammensetzung nach Anspruch 1 oder Anspruch 5, wobei der Pentasil-Zeolith ZSM-5 oder ZSM-11 ist.

8. Katalysatorzusammensetzung nach Anspruch 7, wobei die Katalysatorzusammensetzung mindestens 15 Gew.-% Y-Zeolith, vorzugsweise 15 Gew.-% bis 60 Gew.-% Y-Zeolith, vorzugsweise 25 Gew.-% bis 40 Gew.-% Y-Zeolith umfasst, wobei die Menge an Y-Zeolith auf der gesamten Katalysatorzusammensetzung basiert.

9. Katalysatorzusammensetzung nach Anspruch 6, wobei der Phosphor in den Partikeln vorhanden ist, die den Pentasil-Zeolith enthalten.

10. Katalysatorzusammensetzung nach Anspruch 9, wobei die Pentasil-haltigen Partikel mindestens 8 Gew.-% Phosphor, vorzugsweise mindestens 10 Gew.-% Phosphor, umfassen.

11. Katalysatorzusammensetzung nach Anspruch 9, wobei die Pentasil-haltigen Partikel eine Matrix und Eisenphosphat in der vorliegenden Matrix umfassen.

12. Katalysatorzusammensetzung nach Anspruch 6, wobei das Eisenoxid in einer Menge im Bereich von 1 bis 10 Gew.-% der Partikel vorhanden ist, die den Pentasil-Zeolithen enthalten.

13. Katalysatorzusammensetzung nach Anspruch 6 oder Anspruch 12, wobei Eisenoxid in den Pentasil-haltigen Partikeln vorhanden ist.

14. Katalytisches Crackverfahren, umfassend:

(a) Einführen eines Kohlenwasserstoff-Rohmaterials in einen Reaktionsbereich einer katalytischen Crackanlage, die aus einem Reaktionsbereich, einem Abscheidungsbereich und einem Regenerationsbereich besteht, wobei das Rohmaterial **dadurch gekennzeichnet ist, dass** es einen Anfangssiedepunkt von 120 °C mit Endpunkten bis zu 850 °C aufweist;
(b) katalytisches Cracken des Rohmaterials in dem Reaktionsbereich bei einer Temperatur von 400 °C bis 700 °C, indem das Rohmaterial mit einem fluidisierbaren Crack-Katalysator in Kontakt gebracht wird, der Folgendes umfasst;

(i) Pentasil-Zeolith mit einem Silica/Aluminiumoxid-Gerüst,
(ii) 10 bis 24 Gewichtsprozent Phosphor, gemessen als $P_2O_5$,
(iii) 1 bis 10 Gew.-% Eisen, gemessen als $Fe_2O_3$, das außerhalb des Pentasil-Gerüsts vorhanden ist, und
(iv) Matrix,

wobei die Mengen an Phosphor und Eisenoxid auf der Menge von Partikeln basieren, die Pentasil-Zeolith enthalten, und die Katalysatorzusammensetzung einen Davison Attrition Index (DI) von weniger als 10 aufweist;
(c) Abscheiden von wiedergewonnenen gebrauchten Katalysatorpartikeln mit einer Abscheideflüssigkeit in einem Abscheidungsbereich, um daraus etwas kohlenwasserstoffhaltiges Material zu entfernen; und
(d) Wiedergewinnen von abgeschiedenem kohlenwasserstoffhaltigen Material aus dem Abscheidungsbereich und Zirkulieren von abgeschiedenen gebrauchten Katalysatorpartikeln zu dem Regenerator oder Regenerationsbereich; und Regenerieren des Crack-Katalysators in einem Regenerationsbereich durch Abbrennen einer wesentlichen Menge an Koks auf dem Katalysator und mit jeder zugesetzten Brennstoffkomponente, um den regenerierten Katalysator bei einer Temperatur zu halten, die den katalytischen Crackreaktor auf einer Temperatur von 400 °C bis 700 °C hält; und

(e) Rückführen des regenerierten heißen Katalysators in den Reaktionsbereich.

15. Verfahren nach Anspruch 14, wobei der fluidisierbare Crack-Katalysator eine Zusammensetzung nach einem der Ansprüche 1 bis 13 ist.

16. Verfahren nach Anspruch 14, wobei der Crack-Katalysator einen zusätzlichen Zeolith umfasst, der zum Cracken von Kohlenwasserstoffen in einem fluidisierten katalytischen Crackverfahren geeignet ist, wobei der zusätzliche Zeolith mindestens 15 Gew.-%, vorzugsweise 15 bis 60 Gew.-%, vorzugsweise 25 bis 45 Gew.-%, bezogen auf den gesamten fluidisierbaren Crack-Katalysator, umfasst.

17. Verfahren nach Anspruch 14, wobei der Crack-Katalysator einen zusätzlichen Zeolith umfasst, der zum Cracken von Kohlenwasserstoffen in einem fluidisierten katalytischen Crackverfahren geeignet ist, und der Pentasil-Zeolith ZSM-5 oder ZSM-11 ist.

18. Verfahren nach Anspruch 14, wobei der Crack-Katalysator einen zusätzlichen Zeolith umfasst, der zum Cracken von Kohlenwasserstoffen in einem fluidisierten katalytischen Crackverfahren geeignet ist, und Phosphor in den Partikeln vorhanden ist, die den Pentasil-Zeolithen enthalten.

19. Verfahren nach Anspruch 14, wobei das Rohmaterial in dem Reaktionsbereich bei einer Temperatur von 500 bis 550 °C katalytisch gecrackt wird.

**Revendications**

1. Composition de catalyseur particulaire fluidisable, comprenant :

   (a) une zéolite pentasil ayant un réseau silice/alumine,
   (b) 10 à 24 pour cent en poids de phosphore, mesuré sous forme de $P_2O_5$,
   (c) 1 à 10 pour cent en poids de fer, mesuré sous forme de $Fe_2O_3$, présent à l'extérieur du réseau pentasil, et
   (d) une matrice,

   dans laquelle la quantité de phosphore et d'oxyde de fer ci-dessus est fondée sur la quantité de particules contenant la zéolite pentasil et la composition a une taille moyenne de particules dans la plage de 20 à 200 microns et un indice d'attrition de Davison (DI) inférieur à 10.

2. Composition de catalyseur selon la revendication 1, dans laquelle du phosphate de fer est présent dans la matrice.

3. Composition de catalyseur selon la revendication 1, comprenant en outre une zéolite supplémentaire appropriée pour craquer des hydrocarbures dans un procédé de craquage catalytique fluidisé.

4. Composition de catalyseur selon la revendication 3, dans laquelle ladite zéolite supplémentaire est de la faujasite.

5. Composition de catalyseur selon la revendication 3, dans laquelle la zéolite supplémentaire est sélectionnée à partir de : zéolite Y, REY, REUSY, et des mélanges de celles-ci.

6. Composition de catalyseur selon la revendication 3, dans laquelle la zéolite supplémentaire est présente dans des particules séparées de particules comprenant la zéolite pentasil.

7. Composition de catalyseur selon la revendication 1 ou la revendication 5, dans laquelle la zéolite pentasil est : ZSM-5 ou ZSM-11.

8. Composition de catalyseur selon la revendication 7, dans laquelle la composition de catalyseur comprend au moins 15 % en poids de zéolite Y, de préférence 15 % à 60 % en poids de zéolite Y, de préférence 25 % à 40 % en poids de zéolite Y, ladite quantité de zéolite Y étant fondée sur la composition de catalyseur totale.

**9.** Composition de catalyseur selon la revendication 6, dans laquelle le phosphore est présent dans les particules contenant la zéolite pentasil.

**10.** Composition de catalyseur selon la revendication 9, dans laquelle les particules contenant le pentasil comprennent au moins 8 % en poids de phosphore, de préférence au moins 10 % en poids de phosphore.

**11.** Composition de catalyseur selon la revendication 9, dans laquelle les particules contenant le pentasil comprennent une matrice et du phosphate de fer dans la présente matrice.

**12.** Composition de catalyseur selon la revendication 6, dans laquelle l'oxyde de fer est présent en une quantité variant de 1 à 10 % en poids des particules contenant la zéolite pentasil.

**13.** Composition de catalyseur selon la revendication 6 ou la revendication 12, dans laquelle l'oxyde de fer est présent dans les particules contenant le pentasil.

**14.** Procédé de craquage catalytique, comprenant :

(a) l'introduction d'une charge d'alimentation d'hydrocarbures dans une zone de réaction d'une unité de craquage catalytique composée d'une zone de réaction, d'une zone d'extraction, et d'une zone de régénération, laquelle charge d'alimentation est **caractérisée** comme ayant un point d'ébullition initial de 120°C avec des points limites pouvant atteindre 850°C ;
(b) le craquage catalytique de ladite charge d'alimentation dans ladite zone de réaction à une température de 400°C à 700°C, en faisant en sorte que la charge d'alimentation soit en contact avec un catalyseur de craquage fluidisable comprenant ;

(i) une zéolite pentasil ayant un réseau silice/alumine,
(ii) 10 à 24 pour cent en poids de phosphore, mesuré sous forme de $P_2O_5$,
(iii) 1 à 10 pour cent, en poids de fer, mesuré sous forme de $Fe_2O_3$, présent à l'extérieur du réseau pentasil, et
(iv) une matrice,

dans lequel les quantités de phosphore et d'oxyde de fer sont fondées sur la quantité de particules contenant la zéolite pentasil et la composition de catalyseur a un indice d'attrition de Davison (DI) inférieur à 10 ;
(c) l'extraction de particules de catalyseur utilisées récupérées, avec un fluide d'extraction dans une zone d'extraction pour éliminer de celles-ci un certain matériau hydrocarboné ; et
(d) la récupération de matériau hydrocarboné extrait à partir de la zone d'extraction et la circulation de particules de catalyseur utilisées extraites dans le régénérateur ou la zone de régénération ; et la régénération dudit catalyseur de craquage dans une zone de régénération par brûlage d'une quantité importante de coke sur ledit catalyseur, et avec un quelconque composant combustible ajouté pour maintenir le catalyseur régénéré à une température qui maintiendra le réacteur de craquage catalytique à une température de 400°C à 700°C ; et
(e) le recyclage dudit catalyseur chaud régénéré dans la zone de réaction.

**15.** Procédé selon la revendication 14, dans lequel le catalyseur de craquage fluidisable est une composition selon l'une quelconque des revendications 1 à 13.

**16.** Procédé selon la revendication 14, dans lequel le catalyseur de craquage comprend une zéolite supplémentaire appropriée pour craquer des hydrocarbures dans un procédé de craquage catalytique fluidisé, la zéolite supplémentaire comprenant au moins 15 % en poids, de préférence 15 à 60 % en poids, de préférence 25 % à 45 % en poids sur la base du catalyseur de craquage fluidisable total.

**17.** Procédé selon la revendication 14, dans lequel le catalyseur de craquage comprend une zéolite supplémentaire appropriée pour craquer des hydrocarbures dans un procédé de craquage catalytique fluidisé et la zéolite pentasil est : ZSM-5 ou ZSM-11.

**18.** Procédé selon la revendication 14, dans lequel le catalyseur de craquage comprend une zéolite supplémentaire appropriée pour craquer des hydrocarbures dans un procédé de craquage catalytique fluidisé et le phosphore est présent dans les particules contenant la zéolite pentasil.

**19.** Procédé selon la revendication 14, dans lequel ladite charge d'alimentation est craquée catalytiquement dans ladite zone de réaction à une température de 500 à 550°C.

FIG. 1

FIG. 2

EP 1 907 509 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5997728 A
- US 20050020867 A
- WO 2005097950 A
- US 20020049133 A
- EP 0903178 A
- US 5380690 A
- US 4711710 A
- US 3702886 A
- US RE29948 E
- US 3709979 A
- US 2004011029 A
- WO 9841595 A
- US 3867308 A
- US 3957689 A
- US 4458023 A
- US 4843052 A
- US 6696378 B
- US 81706904 A
- US 5194412 A
- US 5286369 A
- US 3402996 A
- US 3293192 A
- US 3607043 A
- US 3676368 A
- US 4764269 A

**Non-patent literature cited in the description**

- **AMOS A. AVIDAN ; MICHAEL EDWARDS ; HARTLEY OWEN.** Fluid Catalytic Cracking Report. *Oil & Gas Journal,* 08 January 1990
- *J. Catalysis,* 1981, vol. 67, 218-222
- Commercial Preparation and Characterization of FCC Catalysts. Fluid Catalytic Cracking: Science and Technology. Studies in Surface Science and Catalysis, 1993, vol. 76, 120
- **G. W. YOUNG ; G. D. WEATHERBEE ; S. W. DAVEY.** Simulating Commercial FCCU yields with the Davison Circulating Riser (DCR) pilot plant unit. *National Petroleum Refiners Association (NPRA) Paper AM88-52*
- Realistic Assessment of FCC Catalyst Performance in the Laboratory. **G. W. YOUNG.** Fluid Catalytic Cracking: Science and Technology. Elsevier Science Publishers, vol. 76, 257